Europäisches Patentamt

European Patent Office

Office européen des brevets

(11) Publication number: **0 306 254**
**A2**

# EUROPEAN PATENT APPLICATION

(21) Application number: 88307995.6

(22) Date of filing: 30.08.88

(51) Int. Cl.4: **G 06 K 11/06**
**G 06 F 3/033**

(30) Priority: 31.08.87 JP 217288/87
31.08.87 JP 217289/87

(43) Date of publication of application:
08.03.89 Bulletin 89/10

(84) Designated Contracting States: DE FR GB

(71) Applicant: SEIKO INSTRUMENTS INC.
31-1, Kameido 6-chome Koto-ku
Tokyo 136 (JP)

(72) Inventor: Morita, Yoshiyuki c/o Seiko Instruments Inc.
31-1 Kameido 6-chome, Koto-ku
Tokyo (JP)

(74) Representative: Caro, William Egerton et al
J. MILLER & CO. Lincoln House 296-302 High Holborn
London WC1V 7JH (GB)

(54) Co-ordinate reading apparatus.

(57) The invention concerns o-ordinate reading apparatus for feeding co-ordinate data to a computer. Such apparatus comprises a tablet (21) defining a co-ordinate surface, a co-ordinate designator (11) movable across the tablet and electro-magnetically coupled to it, and position signal producing means coupled to the tablet and co-ordinate designator. Co-ordinate calculating means (31), fed by the position signal producing means, calculate co-ordinate value of the point designated by the co-ordinate designator. A pulse sequence generator (7) converts the calculated value into two pulse trains in quadrature, for feeding to the computer. When this apparatus is operated in an absolute co-ordinate mode, different origins on the display and the tablet may result in part of the display being unused, and movement of the co-ordinate outside the area corresponding to the display may cause the origin on the display to move. Initialization means are therefore provided, consisting of initialisation control means (61) for detecting a designation operation, and initialisation circuitry (7) for generating an initialising pulse sequence of two pulse trains in quadrature. Both pulse sequences are sent to the computer.

FIG. 1

EP 0 306 254 A2

## Description

### CO-ORDINATE READING APPARATUS

The present invention relates to a co-ordinate reading apparatus which is used for feeding position data to a computer, and more particularly to a co-ordinate reading apparatus which, when a co-ordinate designator is moved to some co-ordinate, produces a pulse sequence representing that co-ordinate.

Co-ordinate reading apparatus is known which signals the distance moved by a co-ordinate designator (a movable pointer device) on a tablet. Such a co-ordinate reader, which simulates an input device known as a mouse, produces count pulses in the form of two pulse trains of different phases depending upon the distance moved by the co-ordinate designator. (These two pulse trains can conveniently be described as in quadrature, meaning only that their phase difference is greater than 00 and less than 1800.)

In such apparatus, the count pulses are produced only when the co-ordinate designator lies within a predetermined distance (reading height) H of the tablet. This operation, which is called "relative co-ordinate output mode", simulates a mouse.

There has also been proposed another form of co-ordinate reading apparatus which is similar to this but which produces the distance moved even when the co-ordinate designator is moved at a distance from the tablet of more than the reading height. This co-ordinate reading apparatus permits an absolute co-ordinate to be input conditionally. This operation is called "absolute co-ordinate output mode".

To input position data by a co-ordinate reading apparatus of this type, the count pulses are usually integrated by the computer receiving them an are used as a co-ordinate value. A cursor on the display is moved to correspond to the integrated value, using a co-ordinate system on the display. However, the motion of the cursor does not necessarily correspond linearly to the number of the count pulses, because when the cursor reaches the edge of the display, it remains there even though the co-ordinate designator may continue to move. This effect is called "cursor clipping".

It was mentioned above that the absolute co-ordinate can be input conditionally using co-ordinate reading apparatus operating in the absolute co-ordinate mode. This mode gives rise to a difficulty, because when the co-ordinate reading apparatus is connected to the display unit to control a cursor on the display, there is no means for making the indicated position of cursor on the display unit correspond to the co-ordinate system of the co-ordinate reading apparatus. More specifically, this causes two problems.

The first problem arises when the initial position or origin of the cursor on the display does not correspond to the origin of the co-ordinate reading apparatus. In the co-ordinate reading apparatus, the origin, in many cases, is at the lower left corner of the tablet, and the distance moved from the origin is produced as count pulses. On the other hand, the initial position of the cursor can be freely set by the display unit or by a program of a computer to which the display unit is connected. Depending on the program, therefore, the initial position of the cursor often does not correspond to the origin of the co-ordinate reading apparatus.

The second problem arises when the cursor clipping occurs. For example, if the co-ordinate designator is moved far enough to the right, it will be followed by the cursor until the cursor reaches the edge of the display. If the co-ordinate designator is then be moved further to the right, the cursor will remain at the same place. If the direction of movement of the co-ordinate designator is then reversed, to the left, the cursor will immediately begin to move to the left. The cursor thus returns to its initial position before the co-ordinate designator returns to its initial position.

These problems arise because the program has been prepared for a mouse or for co-ordinate reading apparatus that simulates a mouse, ie the program has been prepared for the co-ordinate reading apparatus that operates in the relative co-ordinate mode. Such problems occur in apparatus that produces absolute co-ordinates, but not in apparatus that produces relative co-ordinates.

The main object of the present invention is to alleviate or overcome these problems of co-ordinate reading apparatus which operates in an absolute co-ordinate mode.

Accordingly the present invention provides co-ordinate reading apparatus for feeding co-ordinate data to a computer, comprising: a tablet defining a co-ordinate surface, a co-ordinate designator movable across the tablet and electro-magnetically coupled to it, and position signal producing means coupled to the tablet and the co-ordinate designator; co-ordinate calculating means fed by the position signal producing means for calculating co-ordinate value of the point designated by the co-ordinate designator; and means fed by the co-ordinate calculating means for generating a corresponding pulse sequence of two pulse trains in quadrature; characterised by initialisation means, comprising initialisation control means for detecting a designation operation, and initialisation circuitry responsive thereto for generating an initialising pulse sequence of two pulse trains in quadrature.

The problems addressed by the invention, and four embodiments of co-ordinate reading apparatus in accordance with the invention, given by way of example, will now be described with reference to the drawings, in which:

Figure 1 is a block diagrams of a co-ordinate reading apparatus embodying the invention,

Figures 2 to 4 are partial block diagrams of three modifications of the apparatus of Figure 1, and

Figure 5 is an associated timing chart of count pulses;

Figures 6(A) and 6(B) show a tablet and a display to explain initialisation;

Figure 7(A) is a schematic side view of a tablet and co-ordinate designator to explain the operation of the relative co-ordinate output mode,

Figure 7(B) is an associated timing chart of count 25 pulses, and

Figures 8(A) and 8(B) are corresponding Figures to explain the operation of the absolute co-ordinate output mode;

Figures 9(A) and 9(B) show a display and a tablet and co-ordinate designator to explain cursor clipping;

Figures 10(A) and 10(B) show a tablet and co-ordinate designator and a display to explain a problem involved in known apparatus; and

Figures 11(A) and 11(B) show a tablet and co-ordinate designator and a display to explain another problem involved in known apparatus.

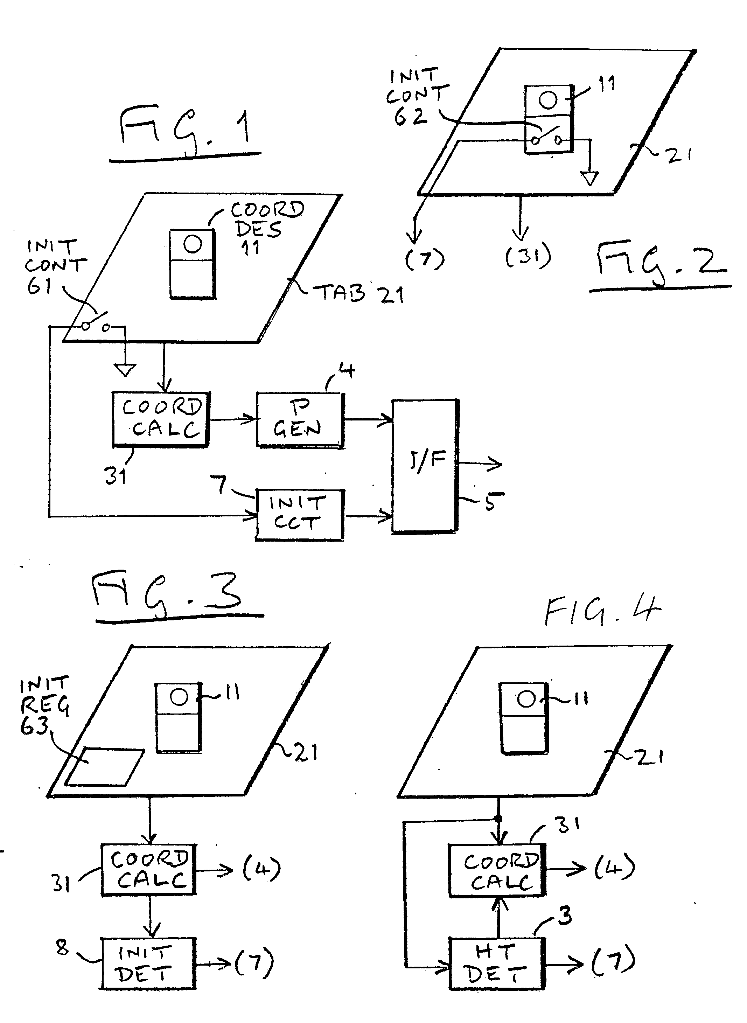

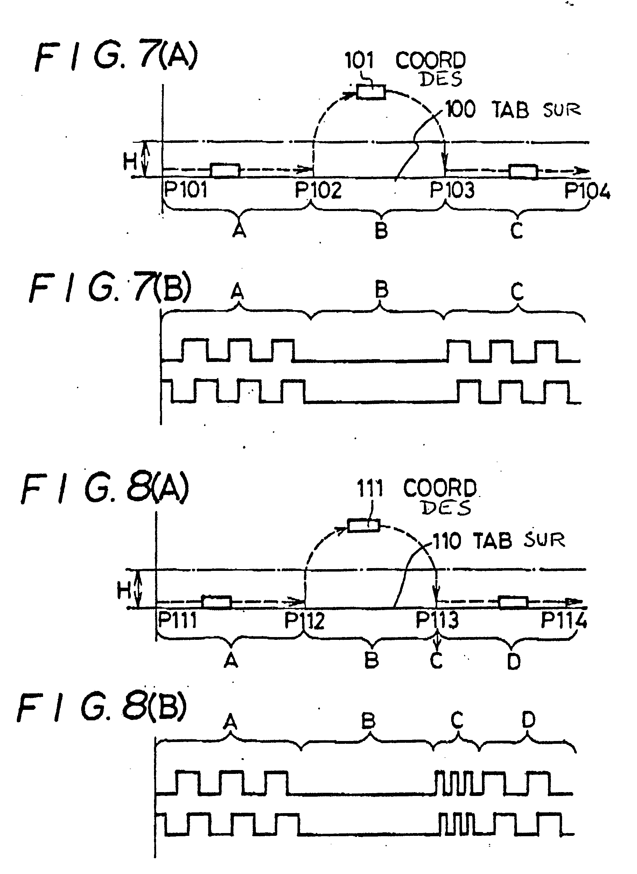

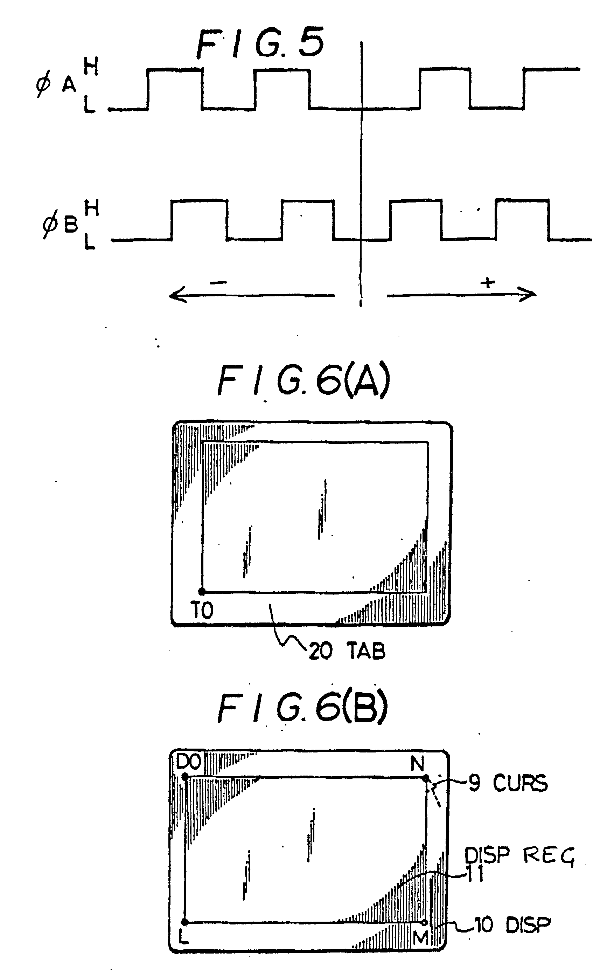

Fig. 1 is a block diagram of a co-ordinate reading apparatus comprising a co-ordinate designator COORD DES 11 and a tablet TAB 21 which together form a co-ordinate reading device, and a co-ordinate value calculation means COORD CALC 31. A pulse sequence generating means P GEN 4 generates a pulse sequence that corresponds to a co-ordinate value found by the co-ordinate value calculation means 31. The pulse sequence is fed to an external unit (not shown) by an interface means I/F 5. As shown in Fig. 5, the pulse sequence consists of two pulse trains in quadrature; the direction is represented y the sign of the phase difference and the distance moved is represented by the number of pulses.

A variety of principles are known for calculating the co-ordinate values and are therefore not described here in detail. Briefly, a signal generated due to electric coupling between the co-ordinate designator 11 and the tablet 12 is calculated as a co-ordinate value by the co-ordinate value calculation means 31.

The co-ordinate reading device is of the electro-magnetic induction type. The fundamental constitution and operation of such devices and apparatus have been described in Japanese Patent Publications Nos. 16317/1984 (co-ordinate reading method and apparatus) and 35069/1984 (interpolation system for a co-ordinate reader), and are therefore not described here. Briefly, the co-ordinate designator 11 has a coil (not shown) for generating an alternating magnetic field, and the tablet 21 contains a plurality of sense line conductors (not shown). When the co-ordinate designator 11 is placed on the tablet 21, induction signals are generated on the sense lines in the tablet 21 through electro-magnetic induction.

There is also a modification or development of this basic system in which the co-ordinate designator and the tablet need not be brought into contact with each other. The amplitude of the induction signal varies depending upon the distance between the co-ordinate designator and the tablet, being large when the co-ordinate designator is placed close to the surface of the tablet and small when it is placed separated away from the surface of the tablet. The distance of the co-ordinate designator from the tablet can thus be determined. As will be seen, this phenomenon is utilized in one embodiment of the present invention.

The apparatus as described so far is the same as that operating in the relative co-ordinate mode. If it is attempted to operate such apparatus in the absolute co-ordinate mode, the problems outlined above arise.

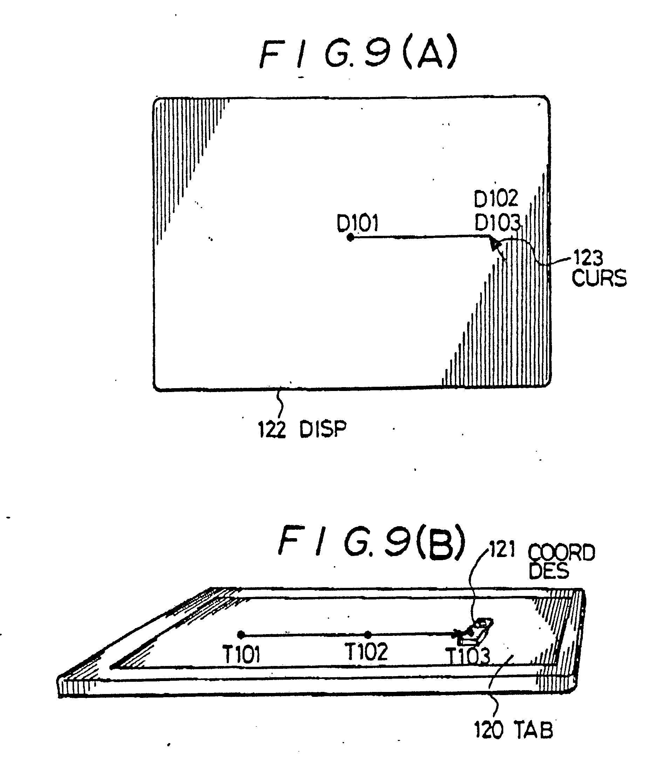

Figs. 7(A) and (B) show the relationship between the movement of the co-ordinate designator and the output of count pulses in apparatus operating in the relative co-ordinate output mode. The count pulses are produced only when the co-ordinate designator 101 lies within a predetermined distance (reading height) H of the tablet surface TAB SUR 100. In Figs. 7(A) and 7(B), the co-ordinate designator 101 is within the reading height H from a point P101 to a point P102, and from a point P103 to a point P104, and count pulses are produced. Over the distance from point P102 to point P103, the co-ordinate designator 101 is further from the tablet than the reading height H, and count pulses are not produced. This operation, which is called "relative co-ordinate output mode", simulates a mouse.

Figs. 8(A) and 8(B) show the relationship between the output of count pulses and the movement of the co- ordinate designator in apparatus operating in the absolute co-ordinate output mode. In this apparatus, when the co-ordinate designator 111 is separated from the tablet by more than the reading height H, the co-ordinate value on the tablet at that position is stored. Then, when the co-ordinate designator 111 is lifted up by more than the reading height H and moved from the point P112 to the point 113 and is placed again at the point P113, the increment is calculated from the point P112 to the point 113 and is produced as count pulses.

Figs. 9(A) and 9(B) show the effect of cursor clipping. A co-ordinate designator 121 is moved on a tablet 120 rightwards, for example, from a point T101 through a point T102 to a point T103. A cursor CURS 123 on the display moves rightwards from a point D101, following the co-ordinate designator, as far as point D102 (correponding to point T102). From here on, however, the cursor is not allowed to move rightwardly any further. The count pulses produced as the co-ordinate designator moves from the point T102 to the point T103 are neglected in the computer.

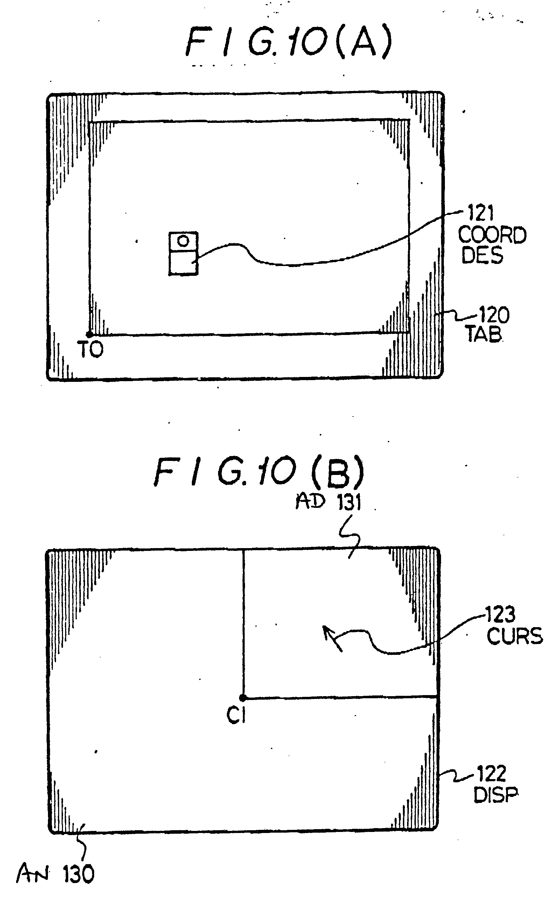

Figs. 10(A) and 10(B) show how different cursor and co-ordinate designator origins can cause a problem. It is assumed that the cursor 123 is initially located at the centre C1 of the display DISP 122. In this case, the cursor is confined to the region AD 131 to the right of and above the origin (the centre of the display), but is not allowed to move into the remaining region AN 130. This is because (assuming that cursor clipping does not occur) the integrated value of the count pulse cannot become negative.

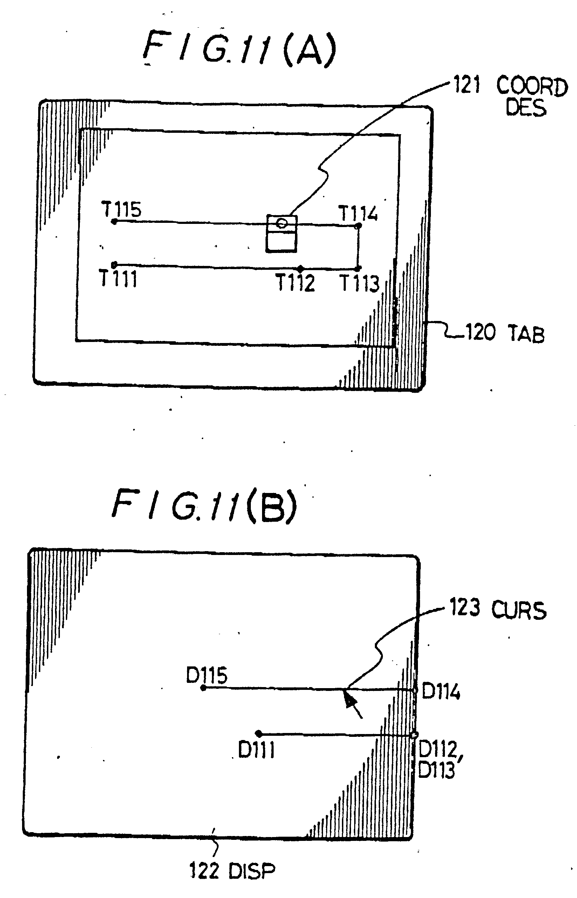

Figs. 11(A) and 11(B) show how cursor clipping can cause the cursor origin to get out of correspondence with the co-ordinate designator origin. Suppose that the co-ordinate designator 121 is moved on the tablet through the points T111, T112, T113, T114, and T115 in sequence. The cursor moves from a point D111 to a point D112 following the movement of the co-ordinate designator from point T111 to point T112. However, cursor clipping is effected from point T112 to point T113, and the cursor stays at point D113 which is the same as D112. Then, as the co-ordinate designator moves from point T113 to points T114 and T115, the cursor moves to points D113, D114 and D115. Thus as a result of cursor clipping, the starting point and end point of the cursor path are not in agreement with each other in the horizontal direction on the display, despite the starting point and the end point of the co-ordinate designator being in agreement with each other in the horizontal direction on the tablet.

To overcome these problems, the present apparatus also includes initialisation control means comprising initialisation pulse output designation means INIT CONT 61 and an initialisation pulse generating means INIT CCT 7. The initialisation pulse output designation means is a control device (INIT control) by means of which the user can cause initalization, and the initialisation pulse generating means 7 is circuitry (INIT circuitry) which responds to the control device to produce pulses which cause initialisation.

In Fig. 1, INIT control 61 is a switching element which is mounted on the tablet 21, and feeds a signal to INIT circuitry 7 which in response generates an initialisation pulse sequence to move the cursor back to the initial position on the screen of the display. The initialisation pulse sequence is, like the pulse sequence that expresses the co-ordinate value, sent from the interface means 5 to an external unit.

The parameters of the initialisation pulse sequence, ie the direction (relative phase) and number of pulses, are chosen as follows. The direction is chosen on the display co-ordinate system that corresponds to the direction of the origin on the tablet. As shown in Fig. 6(A) and 6(B), for example, the origin T0 is usually at the lower left position on the tablet 20. On the display means, however, the upper left position D0 in many cases serves as the origin. In this case, therefore, the initialisation pulse sequence becomes negative in the horizontal direction and positive in the vertical direction.

Further, the number of pulses is chosen so that the cursor can be moved to a position corresponding to the origin on the tablet by the initialisation signal even when the initially displayed position of the cursor is at the maximum distance from the position that corresponds to the origin of the tablet. In the display 10 of Fig. 6(B), point L corresponds to the origin T0 of the tablet, and the furthest point from this is point N. Assume for example that the display region DISP REG 11 of the display DISP 10 consists of 640 ^ 400 pixels, and the program for controlling the cursor moves it by one pixel for one count pulse. Then, the number of the initialisation pulses is selected to be 640 or more. Any extra pulses appearing after the cursor has moved to the point L due to the initialisation pulses are neglected, by the process of cursor clipping.

The INIT circuitry can be contrived in a variety of other ways. Fig. 2 shows a modification in which the INIT control switch is contained in the co-ordinate indicator 12.

Fig. 3 shows another modification, in which an initialisation designation region INIT REG 63 is provided on the tablet 22. An INIT detector 8 is fed by the co-ordinate detecting means 32, and feeds the INIT circuitry 7. As the INIT region 63 is designated by the co-ordinate designator 11, the co-ordinate value detecting means 32 calculates the co-ordinate value of the designated point. The INIT detector 8 determines whether the co-ordinate value is that of a point lying in the initialisation region 63, and if it is, the INIT circuitry 7 generates the initialisation pulse sequence. This is a "menu" processing system, which has been widely known in the systems that employ the co-ordinate reading apparatus.

Fig. 4 shows a further modification, in which height detecting means HT DET 3 detects when the co-ordinate designator 11 is separated from the tablet 21 by a distance greater than the reading height, causes the INIT circuitry 7 to operate accordingly. Thus when the co-ordinate designator 11 is lifted up from the tablet 21 by a distance greater than the reading height, the initialisation pulse sequence is sent to the external display device. In this arrangement, the height detecting means 3 receives induction signals from the tablet 2 and, relying upon the amplitude of the induction signals, determines whether the co-ordinate designator 1 is placed on the tablet 2 within the reading height. The result is sent to co-ordinate value calculation means 31 and the initialisation pulse generating means 7. When the height detecting means 3 determines that the co-ordinate designator 1 is placed within the reading height, a co-ordinate value calculation means 31 receives induction signals from the tablet 2 and calculates the co-ordinate value.

As described above, the present invention is concerned with co-ordinate reading apparatus which operates in an absolute co-ordinate mode and which produces the calculated co-ordinate value as two pulse trains in quadrature, the apparatus being capable of sending an initialisation pulse sequence to an external unit such as a display unit. When the apparatus is connected to the display unit to control the cursor on the display, therefore, the displayed position of the cursor on the display can be set to correspond to the co-ordinate system of the apparatus. There is thus no need to modify the processing performed by the external unit, and the existing software resources can be effectively utilized.

**Claims**

1. Co-ordinate reading apparatus for feeding co-ordinate data to a computer, comprising: a tablet (21) defining a co-ordinate surface, a co-ordinate designator (11) movable across the tablet and electro-magnetically coupled to it, and position signal producing means coupled to the tablet and the co-ordinate designator; co-ordinate calculating means (31) fed by the position signal producing means for calculating co-ordinate value of the point designated by the co-ordinate designator; and means (4) fed by the co-ordinate calculating means for generating a corresponding pulse sequence of two pulse trains in quadrature; characterised by initialisation means, comprising initialisation control means (61; 62; 8, 63; 3) for detecting a designation operation, and initialisation circuitry (7) responsive thereto for generating an initialising pulse sequence of two pulse trains in quadrature.

2. Co-ordinate reading apparatus according to claim 1 characterised in that the initialisation control means comprises a switch (62) on the co-ordinate designator.

3. Co-ordinate reading apparatus according to claim 1 characterised in that the initialisation control means comprises a switch (61) on the tablet.

4. Co-ordinate reading apparatus according to claim 1 characterised in that the initialisation control means comprises an initialisation designation region (63) on the tablet, and means (8) for detecting the designation of that region by the co-ordinate designator.

5. Co-ordinate reading apparatus according to claim 1 characterised in that the initialisation control means comprises height detecting means (3) for detecting separation of the co-ordinate designator from the tablet by more than the reading height.

6. A co-ordinate reading apparatus for inputting co-ordinate data to a computer, said apparatus comprising: a first member in the form of a tablet defining a co-ordinate surface; a second member in the form of a co-ordinate designator movable across said surface; position signal producing means associated with said members for producing electric signals by utilising electric coupling between said members; co-ordinate calculating means connected to said position signal producing means for calculating co-ordinate value of the point designated by said co-ordinate designator; outputting means connected to said co-ordinate calculating means for outputting pulse sequence of two phases having a phase difference corresponding to said calculated co-ordinate value; initialisation pulse output designation means responsive to designation operation for generating an initialisation pulse output instruction signal; and initialisation pulse generation means connected to said initialisation pulse output designation means for outputting initialising pulses to an external device to initialising the external device when said instruction signal occurs.

FIG. 1

FIG. 2

FIG. 3

FIG. 4

F I G. 7(A)

F I G. 7(B)

F I G. 8(A)

F I G. 8(B)

# F I G. 5

$\phi A$ $\begin{smallmatrix} H \\ L \end{smallmatrix}$

$\phi B$ $\begin{smallmatrix} H \\ L \end{smallmatrix}$

$\longleftarrow$ — $\quad$ + $\longrightarrow$

# F I G. 6(A)

TO

20 TAB

# F I G. 6(B)

DO $\qquad$ N $\quad$ 9 CURS

DISP REG
11

L $\qquad$ M $\quad$ 10 DISP

# F I G. 9 (A)

D102
D103
D101

123
CURS

122 DISP

# F I G. 9 (B)

121 COORD
DES

T101        T102        T103

120 TAB

# F I G. 10 (A)

121
COORD
DES

120
TAB

TO

# F I G. 10 (B)

AD 131

123
CURS

CI

122
DISP

AN 130

# F I G.11(A)

121 COORD DES

T115    T114

T111    T112  T113

120 TAB

# F I G.11(B)

123 CURS

D115    D114

D111    D112, D113

122 DISP